# EUROPEAN PATENT APPLICATION

(11) **EP 4 790 681 A1**
(43) Date of publication of application: **12.08.2026**
(21) Application number: 26152241.1
(22) Date of filing: 16.01.2026
(51) Int. Cl.: G08B 25/01, H04N 7/18

(54) **PERSONAL ALARM DEVICE**

(30) Priority: 07.02.2025 US 202519048548
(71) Applicant: Crystal Alarm AB, 803 10 Gävle (SE)
(72) Inventor: OLSSON, Jens, 802 64 Gävle (SE)
(74) Representative: Kransell & Wennborg KB

(57) **Abstract**

A personal alarm device for use in an environment with a plurality of live cameras, each associated with a known position, the personal alarm device comprising: an alarm button; a microphone; a positioning module configured to obtain a current position of the personal alarm device using an external positioning service; and a communication interface configured to take the following actions in response to an activation of the alarm button: report the current position of the personal alarm device to an answering point; initiate an audio connection between the answering point and the microphone; and initiate a video connection between the answering point and one or more live cameras in the vicinity of the current position of the personal alarm device.

## Description

### TECHNICAL FIELD

The present disclosure relates to the field of alarm devices and in particular to connected personal alarm devices.

### BACKGROUND

Personal alarm devices are intended for use by officials or employees who work in dangerous environments or are occasionally exposed to critical situations. The users may be active in fields such as public transport, heavy industry, mining, forestry, defense, law enforcement or social work. To ensure easy access and quick alarm activation, personal alarm devices are designed to be portable or wearable, e.g. in a necklace, around a wrist or attached to clothing.

Upon activation of a connected personal alarm device, an answering point is notified. Additionally, the personal alarm device can send a wireless signal for establishing a voice connection with the answering point and, optionally, sharing its geographical position. An operator or automated service at the answering point may then take suitable action, such as dispatching support personnel to the position of the activated personal alarm device. However, the personal alarm device may be activated in situations of varying severity. To ensure an adequate resource allocation for each situation, it would be desirable to obtain a more comprehensive representation of the scene in which the personal alarm was activated.

### SUMMARY

One objective of the present disclosure is to make available a personal alarm device, a method implemented in a personal alarm device and a method implemented in an answering point. It is a further objective to establish a useful video connection to the scene where the personal alarm was activated. It is a further objective to provide a video connection from an advantageous camera angle. It is a further objective to establish the video connection through suitably selected cameras external to the personal alarm device. It is a further objective to enable standby operation of some components of a safety system which includes the personal alarm device and external cameras.

At least some of these objectives are achieved by the invention as defined by the independent claims.

In a first aspect of this disclosure, there is provided a personal alarm device for use in an environment with a plurality of live cameras, each associated with a known position, the personal alarm device comprising: an alarm button; a microphone; a positioning module configured to obtain a current position of the personal alarm device using an external positioning service; and a communication interface configured to take the following actions in response to an activation of the alarm button: report the current position of the personal alarm device to an answering point; initiate an audio connection between the answering point and the microphone; and initiate a video connection between the answering point and one or more live cameras in the vicinity of the current position of the personal alarm device.

In a second aspect of this disclosure, there is provided a method implemented in a personal alarm device, comprising: sensing an alarm activation by a user of the personal alarm device; obtaining a current position of the personal alarm device using an external positioning service; reporting the current position of the personal alarm device to an answering point; initiating an audio connection to the answering point; and initiating a video connection between the answering point and one or more live cameras in an environment of the personal alarm device, wherein said one or more live cameras are located in the vicinity of the current position.

In a third aspect of this disclosure, there is provided a method implemented in an answering point, comprising: receiving a current position of a personal alarm device; establishing an audio connection in response to an audio connection request from the personal alarm device; and in response to a video connection request from the personal alarm device, establishing a video connection to one or more live cameras in an environment of the personal alarm device.

The present disclosure further proposes a computer program containing instructions for causing a computer - or the personal alarm device or answering point in particular - to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

As used herein, an "alarm button" can be a soft button or a physical button (hard button). As used herein, an "external positioning service" can be made available by a network of a plurality of local transmitters associated with known positions, a global navigation satellite system (GNSS), or as a functionality in a communication network deployed in the environment. Further, a "live camera" may be a video camera operable to provide a live video stream, which a remote viewer connected to the live camera over one or more communication networks may use for viewing a scene imaged by the camera substantially in real time.

Because a video connection is initiated between the answering point and one or more live cameras in the vicinity of the current position of the personal alarm device, the method avoids the need for a user to hold and/or direct a camera in the personal alarm device, in particular the need to aim the camera at a scene. Further, because the personal alarm device does not need to include a camera, the personal alarm device can be made thinner and more lightweight.

Furthermore, because of the above said feature, the method avoids imaging the scene from a disadvantageous distance with a limited field of view, thereby increasing the likelihood that the entire scene will be visible.

In some embodiments, the communication interface initiates the video connection by requesting the answering point to select said one or more live cameras in the vicinity and establish the video connection to these cameras, the personal alarm user does not need to take an active part in the camera selection. Nor does the answering point need to be involved in the camera selection in these embodiments. In other embodiments, the selection of cameras is under the control of the personal alarm device.

Some embodiments of the invention are adapted for environments with live cameras that are operable in standby mode, and then the communication interface initiates the video connection by further requesting the answering point to activate said one or more live cameras in the vicinity. These embodiments avoid a continuous video recording of the environment, which could otherwise raise legal, integrity or privacy concerns relating to continuous video surveillance. Furthermore, because of the above said feature, these embodiments do not require cameras with continuous power supply or large batteries.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
FIG. 1 is a block diagram of a two-part personal alarm device and is configured to interact with an answering point, wherein the personal alarm device comprises an external physical alarm button;
FIG. 2 is a block diagram of a one-part personal alarm device with a soft alarm button provided in a graphical user interface (GUI);
FIG. 3 shows a two-part personal alarm device, in which the alarm button is provided in a necklace-worn external unit;
FIG. 4 is a flowchart of a method implemented in a personal alarm device;
FIG. 5 is a flowchart of a method implemented in an answering point;
FIG. 6 is a floor plan of an example environment which comprises a plurality of local transmitters operable to facilitate positioning of the personal alarm device and which further comprise a plurality of live cameras;
FIG. 7 is a sequence diagram of an exchange of communications among the personal alarm device, the answering point, and the live cameras in connection with an activation of an alarm button of the personal alarm device; and
FIG. 8A and FIG. 8B are block diagrams of two possible implementations of the answering point.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

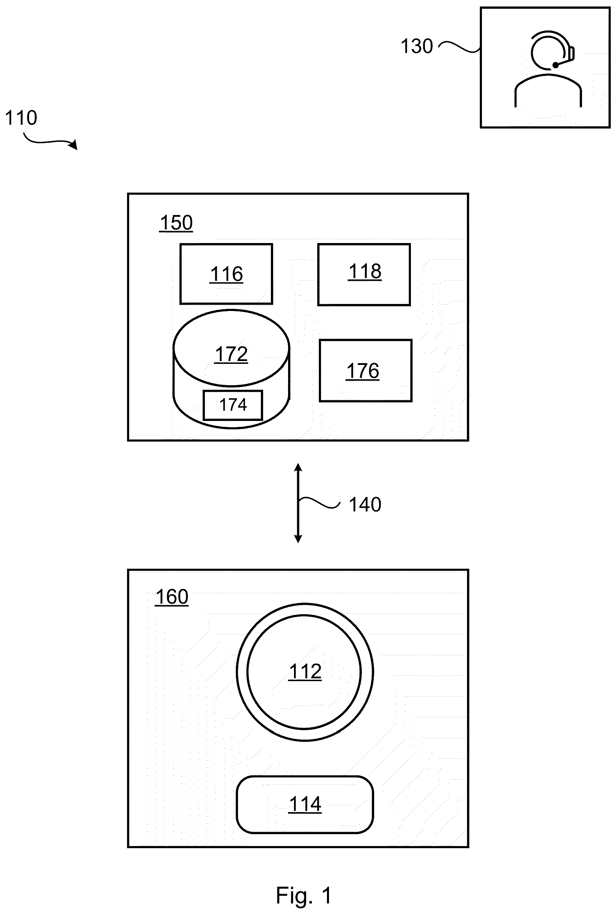

FIG. 1 is a block diagram of a two-part personal alarm device 110. In general terms, the personal alarm device 110 can be described as a portable processing device or portable communication device extended with some components that support certain some alarm-related functionalities, including components allowing the personal alarm device 110 to enter into contact with an answering point 130. An answering point 130 is a device through which a human user or an automated service can receive an incoming alarm from a personal alarm device 110 and may decide to take suitable actions. The answering point 130 may for example be a device in use by an internal security desk in an organization, which can send out personnel or make an emergency call to public authorities when this is needed. In a further example, the answering point 130 may be a device operated by a third-party security provider' call center, which receives incoming alarms from personal alarm devices belonging to multiple client organizations. It is appreciated that a device acting as answering point 130 may be a multifunctional device, such as a general-purpose personal computer or workstation on which additional software applications execute in addition to an answering-point application, such as video monitoring application, a switchboard application, a public address system application etc.

According to the depicted embodiment, the personal alarm device 110 comprises an alarm button 112, a microphone 114 (which is optionally combined with a speaker or headphone (not shown) to enable two-way communication with a user of the personal alarm device 110), a positioning module 116, a communication interface 118, a memory 172 suitable for storing one or more computer programs 174 that the processing circuitry 176 in the personal alarm device 110 can execute.

In the depicted embodiment, the personal alarm device 110 consists of a main unit 150 and an external unit 160, wherein the alarm button 112 (here: a physical button) and the microphone 114 are provided in the external unit 160. The main unit 150 and external unit 160 are connected by a short-range wireless link 140, such as by a Bluetooth^{™} or Wi-Fi^{™} (IEEE 802.11 series) link, or by a 3GPP sidelink. The short-range wireless link 140 may be in existence for as long as the personal alarm device 110 is active, or it may be set up only when needed, such as when the personal alarm button 112 is activated. Alternatively, a wired link may be used to connect the main unit 150 and external unit 160. The main unit 150 according to this embodiment may for example be a suitably configured smartphone, personal digital assistant, tablet, e-reader or the like. A suitable configuration in this sense may be achieved by installing and running a personal-alarm app on the device.

The positioning module 116 is configured to obtain a current position of the personal alarm device using an external positioning service. The external positioning service implements technology that can obtain a location for a device. It may be a third-party indoor or outdoor positioning service. The external positioning service may be a dedicated service (implemented in dedicated hardware) or it may be a functionality of a system with one or more further capabilities. For example, the external positioning service may be one of the following:
- a global navigation satellite system (GNSS), such as GPS, Glonass, BeiDou or Galileo.
- iBeacons,
- Cisco Spaces,
- self-locating HPE Aruba Networking Wi-Fi^{™} access points,
- Wi-Fi^{™} positioning system (WPS),
- Wi-Fi^{™} round-trip time (RTT) measurement,
- Wi-Fi^{™} angle-of-arrival (AoA) measurement,
- Bluetooth^{™} AoA measurement,
- Bluetooth^{™} Channel Sounding,
or a combination of one or more of these. It is understood that positioning module 116 may have different roles depending on the external positioning service chosen. For example, the positioning module 116 may act as a receiver of a message indicating the current position on closed form, the positioning module 116 may measure a signal such that the current position can be computed from the measurement (e.g., in GNSS or iBeacon), or the positioning module 116 may be configured to receive a message in response to having transmitted a positioning request to the external positioning service.

To enable interaction with the answering point 130, the communication interface 118 is compliant with a noncellular standard (e.g., Wi-Fi^{™}) or a cellular standard (e.g., 3GPP LTE, 3GPP NR or higher) or some other radio access technology. It may be configured to establish and maintain data links to access points or radio base stations which are installed in an environment 120 where the personal alarm device 110 operates. The access points or radio base stations are, in turn, connected to cellular or noncellular network infrastructure. This allows the communication interface 118 to exchange incoming and outgoing communications with the answering point 130. As described below, the communication interface 118 is configured to take certain actions, particularly to transmit certain messages, in reaction to sensing that the user activates the alarm button 112. It is appreciated that these actions by the communication interface 118 may be originally triggered by software that executes on the processing circuitry 176, such as an installed personal alarm app.

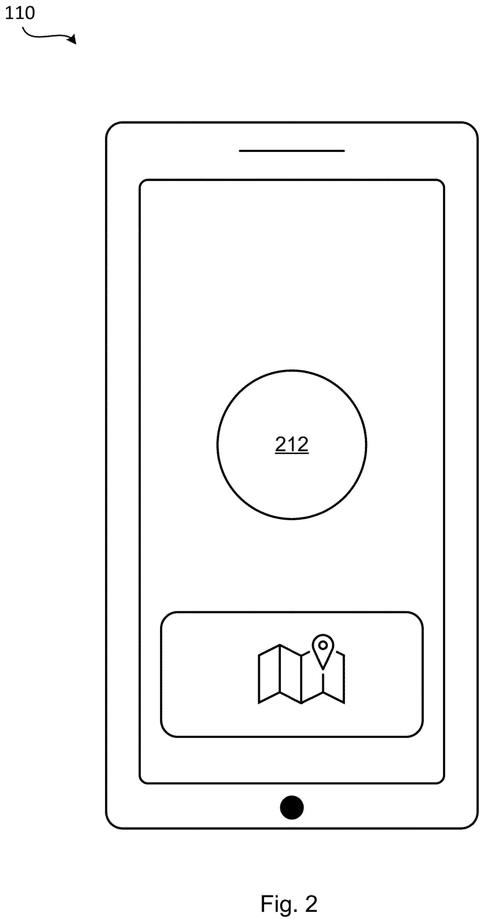

FIG. 2 illustrates an embodiment where the personal alarm device 110 is embodied as a one-part physical device. The personal alarm device 110 according to this embodiment may for example be a suitably configured smartphone, personal digital assistant, tablet, e-reader or the like. In this embodiment, the alarm button is implemented as a soft button 212 in a GUI of the personal alarm device 110. It is appreciated that a soft button is a visible area of a GUI screen which a user can tap or click on, in order to trigger a preconfigured behavior of the device. For the personal alarm device 110 in FIG. 2, the preconfigured behavior is an activation of an alarm. In particular, the soft button 212 may be provided on a lock screen of the personal alarm device 110, in addition to the regular GUI, such that the user can activate the soft button 212 also while the personal alarm device 110 is in locked mode. This way, the user can save valuable time and avoid disclosing any unlocking code or unlocking gesture to bystanders. For simplicity of the drawing, the further components microphone, positioning module and communication interface are merely implicit in FIG. 2.

In a variation of the embodiment according to FIG. 2, the alarm button is a physical button on the personal alarm device 110. In the case of a smartphone, the physical button may have further uses in addition to activating the alarm. For example, the smartphone may be executing a personal alarm app which causes it to activate an alarm when the user presses the regular power button (physical button) repeatedly. Similarly, the personal alarm app may configure this reaction when the user presses a combination of physical buttons.

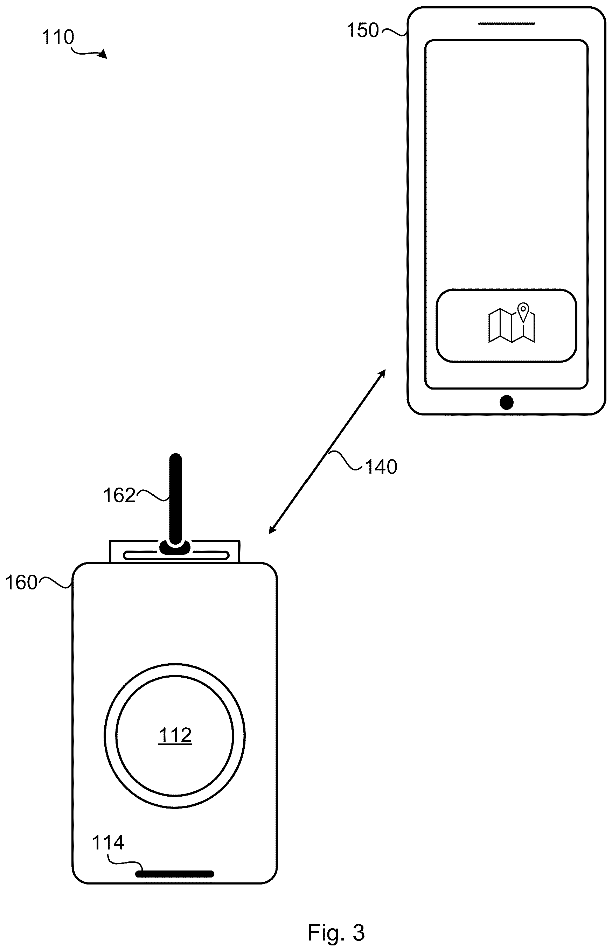

In the embodiment depicted in FIG. 3, the personal alarm device 110 consists of a main unit 150 (e.g., a suitably configured smartphone) and an external unit 160 on which a physical button 112 is provided. The external unit 160 further comprises a microphone 114 (optionally with a speaker) and an attachment member 162 allowing the external unit 160 to be worn in a necklace or lanyard. Here, the personal alarm device 110 is configured such that the user can activate an alarm by means of the external unit 160 alone. In a variation of the embodiment according to FIG. 3, the microphone 114 (and the optional speaker) are provided in the main unit 150.

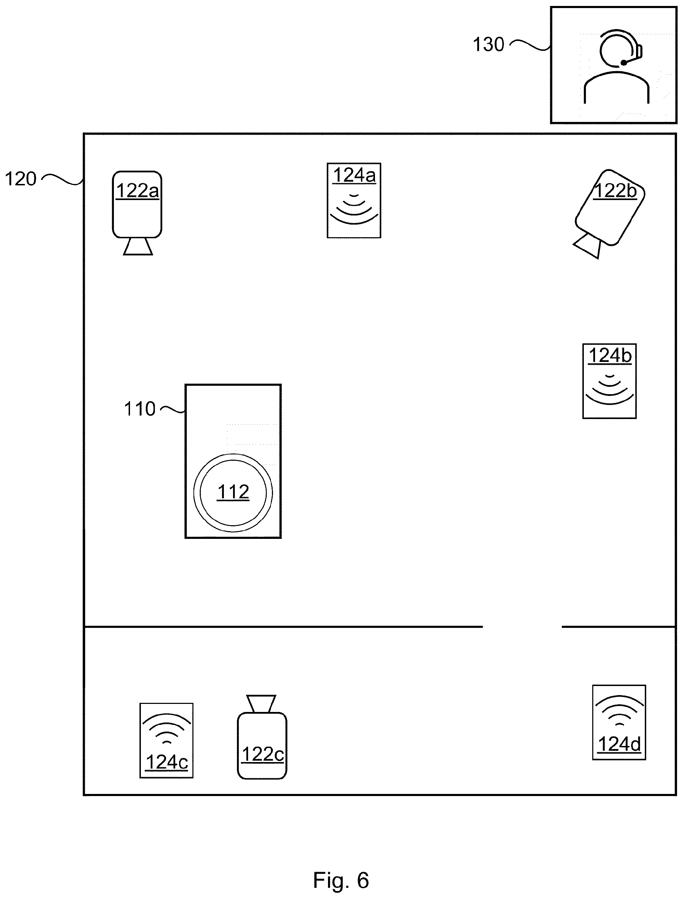

FIG. 6 shows an example environment 120 where the personal alarm device 110 can be used. More precisely, FIG. 6 is a floor plan of the example environment 120, which is here the interior of building. The personal alarm device 110 can be moved freely between different rooms of the building. One or more live cameras 122 are installed in the building, e.g., by being attached to walls or ceilings. Although a live camera 122 may have an adjustable field of view (e.g., by a pan tilt zoom arrangement, PTZ), it is considered difficult to cover the full building interior by a single camera, and thus a plurality of live cameras 122 have been installed.

As mentioned initially, one of the objectives of the present disclosure is to provide a video connection from camera angle that is advantageous from the point of view of the current position of the personal alarm device 110. For this purpose, each live camera 122 has a known position, which may be inspected in a camera configuration table available to the personal alarm device 110 and/or the answering point 130 and/or a third-party video stream service provider. An example is shown in Table 1.

| **Table 1: Example camera configuration table** | |
|---|---|
| Camera identifier | Camera location |
| 122a | ***Xₐ*** |
| 122b | ***X_{b}*** |
| 122C | ***X_{c}*** |
| 122d | ***X_{d}*** |
| 122e | ***Xₑ*** |
| 122f | ***X_{f}*** |

A camera configuration table of this kind may contain manually measured positions of the live cameras 122, or it may - for such live cameras 122 that have a self-positioning functionality - contain positions reported by the live cameras 122 themselves. The camera positions contained the camera configuration table may be expressed in the same reference frame as the position of the personal alarm device 110, or the camera positions may be expressed in a reference frame that can be converted into the reference frame used for the position of the personal alarm device 110. The reference frame may be a two- or three-dimensional geographic reference frame, or it may be a local reference frame adapted to a building, e.g., with axes oriented parallel to the main axes of the building. This allows a determination of which live cameras 122 are in the vicinity of the current position of the personal alarm device 110.

The environment 120 further comprises a plurality of local access points 124, such as Wi-Fi^{™} access points or cellular base stations (e.g., pico base stations or radio dots), which collectively form an access network that provides the personal alarm device 110 with wireless connectivity via its communication interface 118. In the embodiment illustrated in FIG. 6, the local access points 124 are further associated with a known position, and the positioning module 116 of the personal alarm device 110 can determine the current position based on measurements on at least one signal from the local access points 124.

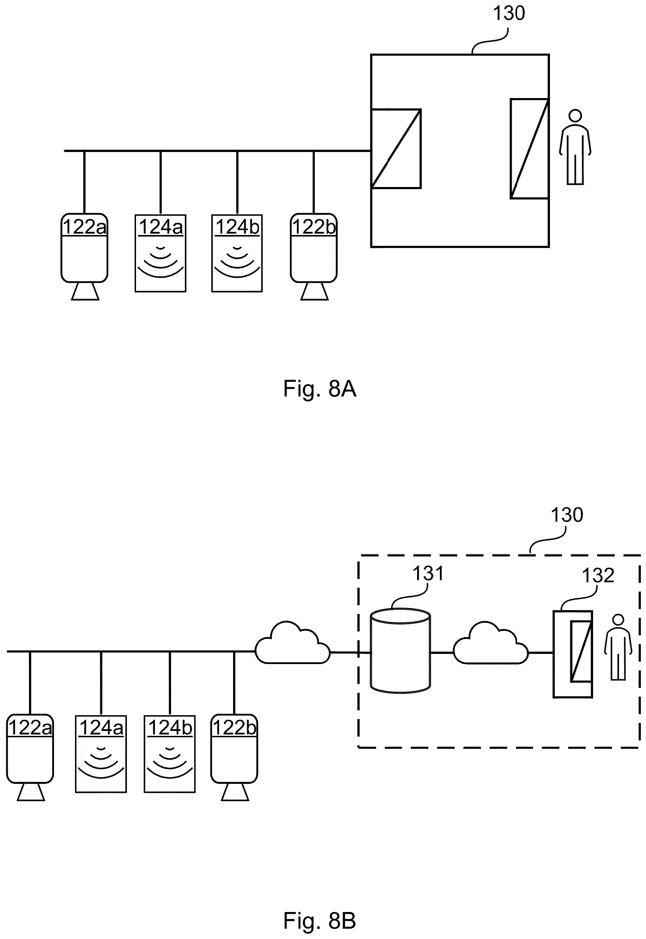

FIG. 8 illustrates that, in different embodiments, the answering point 130 may be implemented either as a local processing device or at least partially using networked processing resources.

FIG. 8A shows a local implementation, where the answering point 130 is a local computer (e.g., a personal computer) with one operator interface and one communication interface with the live cameras 122 and network infrastructure 124 allowing it to communicate with the personal alarm device 110. The operator interface drawn on the right-hand side of the answering point 130 is designed for use by a human operator or an automated service (e.g., a machine-learning agent trained to handle incoming alarms). The operator interface may be a graphical user interface with text, voice and video capabilities. It is understood that the answering point 130 further includes processing circuitry (not shown), to which tasks such as position-based selection of live cameras can be entrusted.

FIG. 8B shows a cloud implementation, in which the answering point 130 comprises a host computer 131 and a local device 132. The host computer (or server) 131 provides networked ('cloud') resources and storage. All components of the answering point 130 can be implemented in the host computer 131, except for the operator interface which runs on the local device 132. In particular, the host computer 131 may be responsible for the exchange of message with the personal alarm device 110 and live cameras 122. The host computer 131 and the local device 132 can be located remotely from each other but are joined by a data connection while they are in operation.

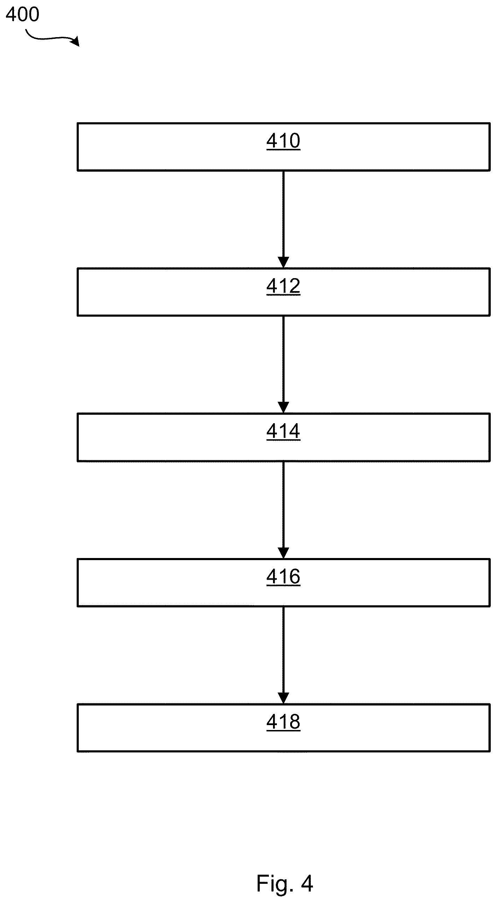

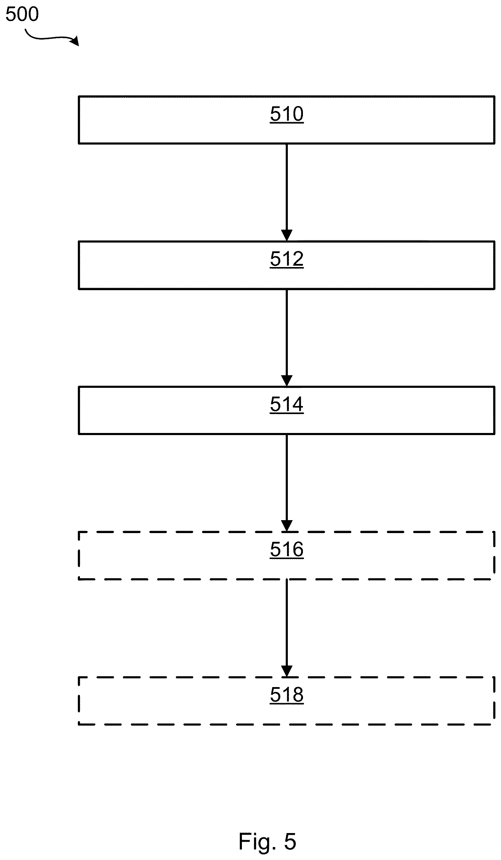

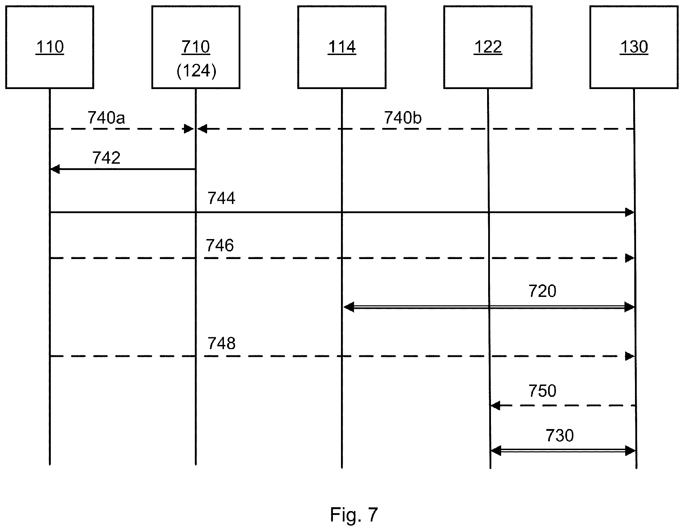

FIG. 7 illustrates a possible interaction of the personal alarm device 110 and the answering point 130 when an alarm is activated. From the perspective of the personal alarm device 110, the interaction corresponds to the configured behavior (e.g., instructions in software) of the method 400 according to the flowchart in FIG. 4. From the perspective of the answering point 130, the same interaction corresponds to the configured behavior of the method 500 according to FIG. 5. The description below will refer to drawing elements in all of FIGs. 4, 5 and 7 as needed.

After the personal alarm device 110 senses an alarm activation from a user (step 410), it obtains its current position using the external positioning service 710 (step 412). The personal alarm device 110 may receive the current position from the external positioning service 710 (message 742) either periodically or after actively requesting the current position from the external positioning service 710, e.g. by sending a positioning request (message 740a).

Next, the personal alarm device 110 reports its current position to the answering point 130 (step 414), such as by sending a report message 744 that is received which the answering point 130 receives (step 510). Optionally, the personal alarm device 110 may be configured to report an updated current position periodically for as long as the alarm is active. The alarm may be considered active from step 410 until the user of the personal alarm device 110 and/or the answering point 130 closes the alarm by inputting a reset command, or another command with this meaning.

After this, the personal alarm device 110 initiates a video connection 730 between the answering point 130 and one or more of the live cameras 122 (step 418). The video connection 730 is preferably a unidirectional, digitally coded connection from the live camera(s) 122 towards the answering point 130. This may include sending a video connection request 748 to the answering point 130, which the answering point 130 carries out (step 514). The answering point 130 may carry out the video connection request 748 by making a call to an external video management service (VMS), which manages the live cameras 122 in the environment 120 and which can establish the video connection 730 as requested. The live cameras 122 that participate in the video connection 730 are a subset of all live cameras 122 in the environment 120, namely, those video cameras which are located in the vicinity of the reported current position of the personal alarm device 110. If multiple live cameras 122 participate in the video connection 730, the answering point 130 may display to the operator a compound video image composed of multiple sub-images, or it may display a single video image and enable the operator to toggle between different live cameras as desired.

In some embodiments, said subset of the live cameras 122 is determined by the personal alarm device 110. In this case, the video connection request 748 indicates said one or more live cameras in the vicinity (e.g., in terms of their camera identifiers), and requests the answering point 130 to establish the video connection to these live cameras. In other embodiments, the subset of the live cameras 122 is determined by the answering point 130. Then, the video connection request 748 requests the answering point 130 to select said one or more live cameras 120 in the vicinity (step 516) and to establish the video connection to these cameras; the video connection request 748 need not contain any camera identifiers.

One way of determining the subset of the live cameras 122 that are in the vicinity of the current position of the personal alarm device 110 is to select all live cameras 122 which are within a predetermined radius *R*₀ of the current position *X*₁₁₀ of the personal alarm device 110. In mathematical language, if ∥*X*₁₁₀ - *Xₐ*∥ ≤ *R*₀ for a live camera 122a, then live camera 122a shall participate in the video connection 720; if ∥***X***₁₁₀ *- **X**_{b}*∥ ≤ *R*₀ for a live camera 122b, then live camera 122b shall participate in the video connection 720, and so forth until all available live cameras 122 in the environment 120 have been evaluated. This evaluation is optionally followed by a pruning step, where a too numerous set of selected live cameras 122 is reduced (e.g., randomly) down to an acceptable predefined number. For example, the answering point 130 may effectuate this pruning in view of the available video data bandwidth between itself and the live cameras 122, and/or in view of how many simultaneous video streams the answering point 130 is capable of displaying.

The following alternative way of determining the subset of the live cameras 122 that are in the vicinity of the current position of the personal alarm device 110 is particularly suitable in environments 120 with an uneven density of live cameras 122:
- In a first step, it is assessed whether any of the live cameras 122 is within a predetermined first radius *R*₁. If so, this or those live cameras 122 are chosen and the selection ends.
- If not, a second step is executed, in which it is assessed whether any of the live cameras 122 is within a predetermined second radius *R*₂, which is greater than the first radius *R*₁. For example, *R*₂ = 1.5 × *R*₁. If so, this or those live cameras 122 are chosen and the selection ends.
- If not, a third step is executed, in which it is assessed whether any of the live cameras 122 is within a predetermined third radius *R*₃, which is greater than the second radius *R*₁. For example, *R*₃ = 2 × *R*₀*.* If so, this or those live cameras 122 are chosen.
The selection may end if the third step is unsuccessful, or it may proceed to an analogous fourth, fifth etc. step. The first, second, third etc. radii *R*₁, *R*₂*, R*₃*,* ... may be any sequence of increasing numbers. It may be adjusted in view of the observed performance for a concrete environment 120.

A third way of determining the subset of the live cameras 122 that are in the vicinity of the current position of the personal alarm device 110 is by preconfigured associations between the possible positions of the personal alarm device 110 and the live cameras 122. One option is, that a system owner preconfigures a set *Cₖ* of live cameras 122 for each geometric area *Sₖ* (e.g., a room or a portion of a room in a building) of the environment. The camera selection then is a rule such that if ***X***₁₁₀ ∈ *Sₖ*, then the live cameras in *Cₖ* shall participate in the video connection 730. In the example of FIG. 6, the upper room may be denoted by *S*₁ and the lower room by *S*₂, and the associated live camera sets are *C*₁ = {122*a*, 122*b*} and *C*₂ = {122*c*}.

Still referring the third way of determining the subset of live cameras 122 in the vicinity of the personal alarm device 110, a second option is to leverage an inherent segmentation of the external positioning service 710. FIG. 6 illustrates an external positioning service 710 which includes a plurality of local transmitters 124 such that the positioning module 116 determines the current position of the personal alarm device 110 based on measurements on at least one signal from one of the local transmitters 124. In this and similar situations, the preconfigured associations may be associations between the live cameras 122 and the local transmitters 124. If the personal alarm device 110 receives a signal from a particular local transmitter 124 (with a signal power above a threshold), a number of associated particular live cameras 122 will be selected for the video connection 730. To illustrate, the camera configuration table may be extended with associated local transmitters 124 as shown in Table 2.

| **Table 2: Example camera configuration table** | | |
|---|---|---|
| Camera identifier | Camera location | Associated transmitter |
| 122a | ***Xₐ*** | 124a |
| 122b | ***X_{b}*** | 124b |
| 122c | ***X_{c}*** | 124c, 124d |

Table 2 shows that the associations between live cameras 122 and local transmitters 124 may be one-to-one or one-to-many. It is furthermore possible to define many-to-one associations, such that the receipt of one local transmitter's 124 signal (with a signal power above a threshold) leads to the selection of multiple live cameras 122. The camera locations in Table 2 are not needed for the selecting of the live cameras 122 to participate in the video connection 730.

At any time after the activation of the alarm button 112, the personal alarm device 110 initiates an audio connection 720 (step 416) by sending an audio connection request (message 746) to the answering point 130. The answering point 130 reacts by establishing an audio connection 720 (step 512). The endpoints of audio connection 720 are the microphone 114 (and the optional speaker) of the personal alarm device 110 and a corresponding microphone and/or speaker at the answering point 130. In different embodiments, the initiation of the audio connection may begin before steps 412, 414 and 418, during any of these steps, or after they have completed.

In a variation of the embodiment just described, the answering point 130 may be configured to send a positioning request (message 740b) on behalf of the personal alarm device 110. For example, the answering point 130 may be configured to send the positioning request 740b only after it has received an alarm from the personal alarm device 110, and the external positioning service 710 can be requested to send the position message 742 either directly to the answering point 130 or to the personal alarm device 110, which forwards the position to the answering point in message 744. If the position message 742 is sent directly to the answering point 130, the message 744 may be a pure alarm activation message, which does not necessarily contain the position of the personal alarm device 110.

A further development of these teachings addresses such environments 120 where at least some of the live cameras 122 are operable in a standby mode (or sleep mode, or power-saving mode, or hibernation mode). If a live camera 122 in standby mode is selected for participation in the video connection 730, it is necessary to 'wake' this live camera 122 up. This may be achieved by a camera activation message 750, which is directed to the live camera 122 in standby mode and which causes it to enter an active mode and become available for the video connection 730. The camera activation message 750 is preferably sent by the answering point 130 (step 518). The camera activation message 750 may have the form of a request to an external VMS, from which it is implicit that the VMS is to activate any selected cameras that are currently in standby mode. From the perspective of the personal alarm device 110, if the personal alarm device 110 has selected a live camera 122 in standby, it may be necessary to extend the video connection request 748 with a particular request for the answering point 130 to activate that camera, unless this is implicit from a pre-agreed protocol. Alternatively, the camera activation message 750 could in principle be sent by the personal alarm device 110 directly to the live camera(s) 122 concerned.

Common to all of these options, it is noted that the activating of the live cameras 122 in standby may be a time-critical operation when the personal alarm has been activated. If the camera activation message 750 is not sent proactively - but only, say, in the case of a timeout - then valuable time could be lost.

To recapitulate, the present disclosure has described a technically efficient solution to the long-felt need of extending a personal alarm session with a video connection to the answering point. In an advantageous embodiment, the video connection to the answering point does not begin at the personal alarm device itself, but it runs from a fixed live camera in the environment which is dynamically selected from a set of available live cameras based on a current position of the personal alarm device.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A personal alarm device for use in an environment with a plurality of live cameras, each associated with a known position, the personal alarm device comprising:
an alarm button;
a microphone;
a positioning module configured to obtain a current position of the personal alarm device using an external positioning service; and
a communication interface configured to take the following actions in response to an activation of the alarm button:
- report the current position of the personal alarm device to an answering point;
- initiate an audio connection between the answering point and the microphone; and
- initiate a video connection between the answering point and one or more live cameras in the vicinity of the current position of the personal alarm device.

2. The personal alarm device according to claim 1, wherein the communication interface initiates the video connection by requesting the answering point to select said one or more live cameras in the vicinity and establish the video connection to these cameras.

3. The personal alarm device according to claim 2, wherein:
the live cameras in the environment are operable in standby mode; and
the communication interface initiates the video connection by further requesting the answering point to activate said one or more live cameras in the vicinity.

4. The personal alarm device according to claim 1, wherein the communication interface initiates the video connection by indicating said one or more live cameras in the vicinity, and requesting the answering point to establish the video connection to these live cameras.

5. The personal alarm device according to claim 4, wherein the communication interface is configured to select said one or more live cameras in the vicinity by comparing the current position of the personal alarm device with the known positions of the live cameras in the environment.

6. The personal alarm device according to claim 1, wherein the external positioning service includes a plurality of local transmitters, each associated with a known position, or a global navigation satellite system, and
the positioning module is configured to determine the current position based on measurements on at least one signal from one of the local transmitters or from the GNSS.

7. The personal alarm device according to claim 1, wherein:
the external positioning service is a functionality in a communication network deployed in the environment; and
the positioning module is configured to request the current position from the communication network.

8. The personal alarm device according to claim 1, wherein:
the personal alarm device comprises a main unit and an external unit connected by a short-range wireless link; and
the alarm button is provided in the external unit.

9. The personal alarm device according to claim 1, wherein the alarm button is a physical button provided in a main unit of the personal alarm device.

10. The personal alarm device according to claim 1, wherein the alarm button is a soft button provided in a graphical interface in the main unit of the personal alarm device.

11. A method implemented in a personal alarm device, comprising:
sensing an alarm activation by a user of the personal alarm device;
obtaining a current position of the personal alarm device using an external positioning service;
reporting the current position of the personal alarm device to an answering point;
initiating an audio connection to the answering point; and
initiating a video connection between the answering point and one or more live cameras in an environment of the personal alarm device, wherein said one or more live cameras are located in the vicinity of the current position.

12. A method implemented in an answering point, comprising:
receiving a current position of a personal alarm device;
establishing an audio connection in response to an audio connection request from the personal alarm device; and
in response to a video connection request from the personal alarm device,
establishing a video connection to one or more live cameras in an environment of the personal alarm device.

13. The method of claim 12, wherein the environment of the personal alarm device comprises a plurality of live cameras, each associated with a known position, the method further comprising:
selecting said one or more live cameras by comparing the received current position of the personal alarm device with the known positions of the live cameras in the environment.

14. The method of claim 12 or 13, the live cameras in the environment are operable in standby mode, further comprising:
activating said one or more live cameras in the vicinity.

15. The method of claim 12, wherein the video connection request includes an indication of said one or more live cameras.

16. A computer program comprising instructions to cause a personal alarm device to execute the steps of the method of claim 11 or to cause an answering point to execute the steps of the method of claim 12.
